(19) Europäisches Patentamt
European Patent Office
Office européen des brevets

(11) EP 0 790 485 A2

(12) EUROPÄISCHE PATENTANMELDUNG

(43) Veröffentlichungstag:
20.08.1997 Patentblatt 1997/34

(51) Int. Cl.⁶: G01C 21/16

(21) Anmeldenummer: 97102181.1

(22) Anmeldetag: 12.02.1997

(84) Benannte Vertragsstaaten:
CH DE FR GB GR IT LI

(30) Priorität: 13.02.1996 DE 29602453 U

(71) Anmelder: Bodenseewerk Gerätetechnik GmbH
88662 Überlingen (DE)

(72) Erfinder:
• Schneider, Alfred
88662 Überlingen (DE)

• Geister, Götz
88699 Frickingen (DE)

(74) Vertreter: Weisse, Jürgen, Dipl.-Phys. et al
Patentanwälte
Dipl.-Phys. Jürgen Weisse
Dipl.-Chem. Dr. Rudolf Wolgast
Bökenbusch 41
42555 Velbert (DE)

(54) Inertialsensor-Anordnung

(57) Zur Bestimmung der Nordrichtung und zur Kurshaltung ist ein Faserkreisel (34) auf einem Positionierrahmen (28) angeordnet, der gegenüber einem Gehäuse um eine Hochachse drehbar gelagert ist. Die Meßachse des Faserkreisels bildet mit einer zur Hochachse senkrechten Ebene einen Elevationswinkel σ. Der Positionierrahmen (28) ist in drei festen, durch eine mechanische Arretier-Einrichtung (64,50,52) festgelegten Positionen einrastbar. Zur Bestimmung der Neigung der Inertialsensor-Anordnung sind zwei Beschleunigungsmesser (70,72) mit zueinander gekreuzten Empfindlichkeitsachsen vorgesehen.

FIG. 1

**Beschreibung**

Die Erfindung betrifft eine Inertialsensor-Anordnung mit einem unter Ausnutzung des Sagnac-Effekts arbeitenden Inertialsensor, der auf die Horizontalkomponente der Erddrehrate anspricht und der um eine Hochachse in eine Mehrzahl fester Positionen verdrehbar ist, wobei aus den dabei erhaltenen Signalen durch Signalverarbeitungs-Mittel ein Meßwert für den Winkel zwischen einer Referenz-Richtung und Nord gebildet wird.

Eine solche Inertialsensor-Anordnung ist beispielsweise bekannt durch die US-A-5 060 392. Bei dieser bekannten Inertialsensor-Anordnung dient als Inertialsensor ein Ringlaser-Kreisel. Die Drehbewegungen eines den Ringlaser-Kreisel tragenden Kardanrahmens werden durch den Kreisel selbst gemessen. Beschleunigungsmesser sind auf dem Kardanrahmen angeordnet.

Der Erfindung liegt die Aufgabe zugrunde, eine Inertialsensor-Anordnung der eingangs genannten Art einfach, kompakt und preisgünstig herzustellen.

Erfindungsgemäß wird diese Aufgabe dadurch gelöst, daß

(a) der Inertialsensor von einem Faserkreisel gebildet ist,

(b) der Faserkreisel auf einem Positionierrahmen angeordnet ist, der gegenüber einem Gehäuse um die Hochachse drehbar gelagert ist,

(c) der Positionierrahmen durch Einstellmittel in drei feste, durch Arretiermittel festgelegte Positionen eindrehbar ist und

(d) zur Bestimmung der Neigung der Inertialsensor-Anordnung relativ zu der Horizontalen Neigungssensoren mit zueinander gekreuzten Empfindlichkeitsachsen vorgesehen sind.

Statt eines Ringlaser-Kreisels wird als Inertialsensor erfindungsgemäß ein Faserkreisel verwendet. Das ist eine Spule aus lichtleitender Faser, in welche Licht z.B. von einer Laserdiode einmal linksherum und einmal rechtsherum eingeleitet wird. Die beiden Teillichtbündel werden nach Durchlaufen der Faserspule zur Interferenz gebracht. Durch den Sagnac-Effekt sind die optischen Weglängen für das linksherum und das rechtsherum laufende Licht unterschiedlich, wenn die Faserspule eine Drehgeschwindigkeit um ihre Achse erfährt. Die Interferenz, die gemessen werden kann, ist somit abhängig von dieser Drehgeschwindigkeit. Solche -an sich bekannten-Faserkreisel sind einfacher und preisgünstiger als Ringlaser-Kreisel. Es zeigt sich, daß sie eine für die vorliegenden Zwecke ausreichende Empfindlichkeit und Genauigkeit besitzen. Allerdings zeigen solche Faserkreisel eine Drift.

Der Faserkreisel wird benutzt, um Komponenten der Erd-Drehgeschwindigkeit zu messen. Die Messung erfolgt dabei in drei Positionen. In diesen Positionen werden die durch die Erd-Drehgeschwindigkeit hervorgerufenen, um die Meßachse des Faserkreisels wirksamen Winkelgeschwindigkeiten gemessen. Diese Winkelgeschwindigkeiten hängen von Winkelfunktionen der Lagewinkel, also Nick-, Roll- und Azimutwinkel (Winkel zwischen Referenzachse und Nord) ab. Die Messung in drei Positionen liefert drei Gleichungen. Aus diesen drei Gleichungen allein läßt sich aber der Quadrant des Azimutwinkels nicht eindeutig bestimmen. Außerdem ist die Drift unbekannt. Durch die Messung von Nick- und Rollwinkel erhält man aber drei Gleichungen für Azimutwinkel, Quadrant des Azimutwinkels und Drift.

Bei der erfindungsgemäßen Inertialsensor-Anordnung erfolgt die Festlegung der verschiedenen Positionen für die Messungen durch Arrretiermittel. Das ist einfach und sehr genau.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

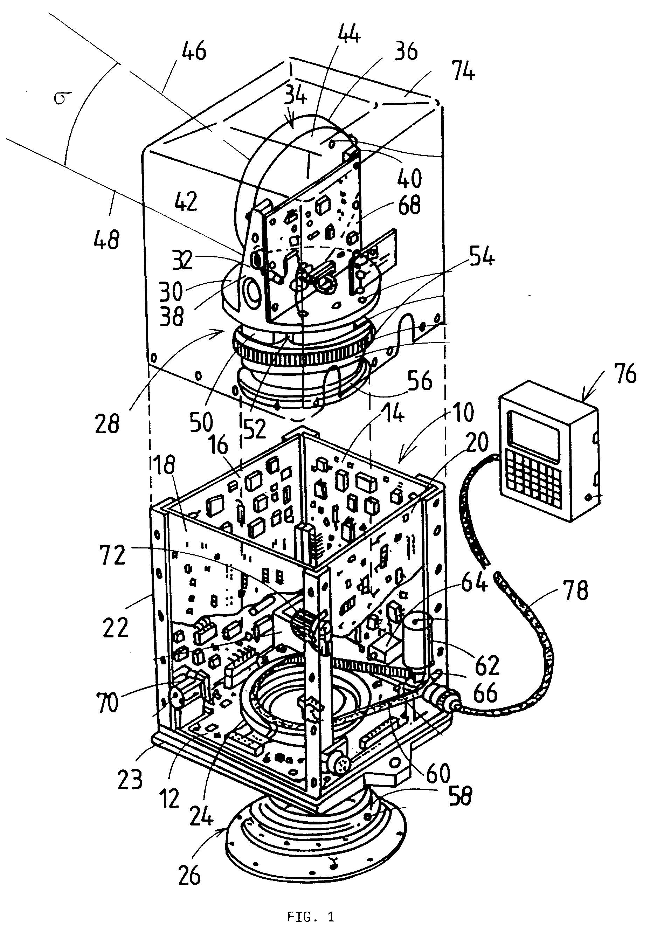

Fig.1    ist eine auseinandergezogen-perspektivische Darstellung einer Inertialsensor-Anordnung mit einem als optischer Faserkreisel ausgebildeten Inertialsensor.

Fig.2    zeigt schematisch den an sich bekannten Aufbau eines optischen Faserkreisels und als Blöcke die Beschleunigungsmesser und die Signalverarbeitung.

Fig.3    ist ein Blockdiagramm der Signalverarbeitung.

Fig.4    ist eine schematische Darstellung des Sensorsystems in bezug auf das fahrzeugfeste Koordinatensystem.

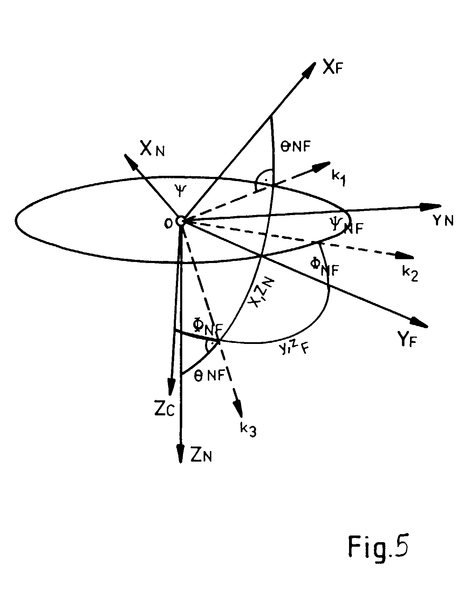

Fig.5    zeigt die relativen Lagen von fahrzeugfestem Koordinatensystem und Navigationssystem und die dabei auftretenden Eulerwinkel.

Die Inertialsensor-Anordnung enthält ein rechteckiges Innengehäuse 10. Das Innengehäuse ist aus fünf Leiterplatten 12, 14, 16, 18 und 20 aufgebaut. Die Leiterplatte 12 ist im wesentlichen quadratisch und bildet einen Boden des Innengehäuses 10. Die rechteckigen Leiterplatten 14, 16, 18 und 20 bilden die Seitenwände des Innengehäuses 10. Nach oben ist das Innengehäuse 10 offen. Die Leiterplatten 12, 14, 16, 18 und 20 sind in einem Rahmenwerk 22 aus L-förmigen Leisten und einer Grundplatte 23 gehalten. Die den Boden des Innengehäuses bildende Leiterplatte 12 und die Grundplatte 23 weisen einen zentralen, kreisförmigen Durchbruch 24 auf. Durch diesen Durchbruch 24 ragt eine Lageranordnung 26 für einen Positionierrahmen 28 hinein. Die Lageranordnung 26 ist in der Zeichnung nach unten herausgezogen dargestellt.

Der Positionierrahmen ist in der auseinandergezogenperspektivischen Zeichnung nach oben aus dem Innengehäuse herausgezogen dargestellt. Tatsächlich ist der Positionierrahmen 28 um eine Hochachse drehbar in der Lageranordnung 26 gelagert und sitzt innerhalb des Innengehäuses.

Der Positionierrahmen 28 weist einen Tisch 30 mit einem Halter 32 für einen Faserkreisel 34 auf. Der Faserkreisel 34 enthält eine (in der Figur nicht sichtbare) flachzylindrische Spule von lichtleitenden Fasern in einem entsprechend flach-zylindrischen Gehäuse 36. Der Halter 32 weist zwei von dem Tisch 30 nach oben ragende Arme 38 und 40 auf. Die Arme weisen in einer Ebene liegende Schrägflächen 42 auf, die gegen die Hochachse geneigt sind. An diesen Schrägflächen 42 liegt die Rückwand 44 des flachzylindrischen Gehäuses 36 an. Die Achse der Spule von lichtleitenden Fasern ist mit 46 bezeichnet. Diese Achse 46 verläuft senkrecht zu der Rückwand 44. Die Achse 46 bildet mit einer zur Hochachse senkrechten Achse 48 einen Winkel $\vartheta$.

Die Achse 46 der Spule bildet die Eingangsachse des Faserkreisels 34. Dadurch, daß diese Achse 46 gegen die im wesentlichen horizontale Achse 48 geneigt ist, erfaßt der Faserkreisel 34 nicht nur eine Komponente der Horizontalkomponente der Erddrehrate sondern auch eine Komponente der Vertikalkomponente der Erddrehrate.

Unterhalb des kreisrunden Tisches 30 und gleichachsig zu diesem sitzt an dem Positionierrahmen 28 ein Positionierring 50. Der Positionierring 50 weist drei um jeweils 90° gegeneinander winkelversetzte, v-förmige Kerben 52 auf. Von den Kerben 52 ist in der Zeichnung nur eine zu sehen. Unterhalb des Positionierringes 50 und gleichachsig zu diesem ist an dem Positionierrahmen 28 eine Zahnriemenscheibe 54 vorgesehen. Unterhalb der Zahnriemenscheibe 54 ist ein Lager 56 für die drehbare Lagerung des Positionierrahmens 28 vorgesehen. Die Lageranordnung 26 weist ein entsprechendes Drehlager 58 auf.

Der so in dem Innengehäuse 10 angeordnete und über Lager 56 und Drehlager 58 drehbar gelagerte Positionierrahmen 28 ist über einen Zahnriemen 60 mit einem Stellmotor 62 gekuppelt. Der Stellmotor 62 ist an der Leiterplatte 14 befestigt. Der Zahnriemen 60 umschlingt die Zahnriemenscheibe 54. Durch den Stellmotor 62 kann der Positionierrahmen 28 in drei verschiedene, um jeweils 90° gegeneinander winkelversetzte Positionen verdreht werden. In diesen Positionen wird der Positionierrahmen 28 mechanisch arretiert. Das geschieht durch eine ansteuerbare Arretierstift-Einheit 64 mit einem Arretierstift 66, der in eine von drei um jeweils 90° gegeneinander winkelversetzten v-förmigen Kerben 52 des Positionierringes 50 eingreift. Es kann natürlich auch in dem Positionierring 50 nur eine Kerbe 52 vorgesehen werden, die mit drei jeweils um 90° gegeneinander winkelversetzten Arretierstift-Einheiten zusammenwirkt. Durch die V-Form der Kerben 52 können die Positionen des Positionierrahmens 28 mit hoher Genauigkeit festgelegt werden.

Auf den Leiterplatten 12, 14, 16, 18 und 20 sind die Bauteile der Signalverarbeitung angeordnet. Weitere Bauteile sitzen auf einer Leiterplatte 68, die auf der den Schrägflächen 42 abgewandten Seite der Arme 38 und 40 hinter dem Faserkreisel 34 angebracht ist.

Die Leiterplatte 18 trägt einen Beschleunigungsmesser 70. Die Empfindlichkeitsachse des Beschleunigungsmessers 70 erstreckt sich senkrecht zu der Leiterplatte 18. Die Leiterplatte 20 trägt einen Beschleunigungsmesser 72. Die Empfindlichkeitsachse des Beschleunigungsmessers 72 erstreckt sich senkrecht zu der Leiterplatte 20 und ist somit gekreuzt zu der Empfindlichkeitsachse des Beschleunigungsmessers 70.

Das Innengehäuse 10 ist durch ein nach unten offenes Außengehäuse 74 abgedeckt. Eine getrennte Anzeige- und Bedieneinheit 76 ist mit dem übrigen Gerät über ein Kabel 78 verbunden.

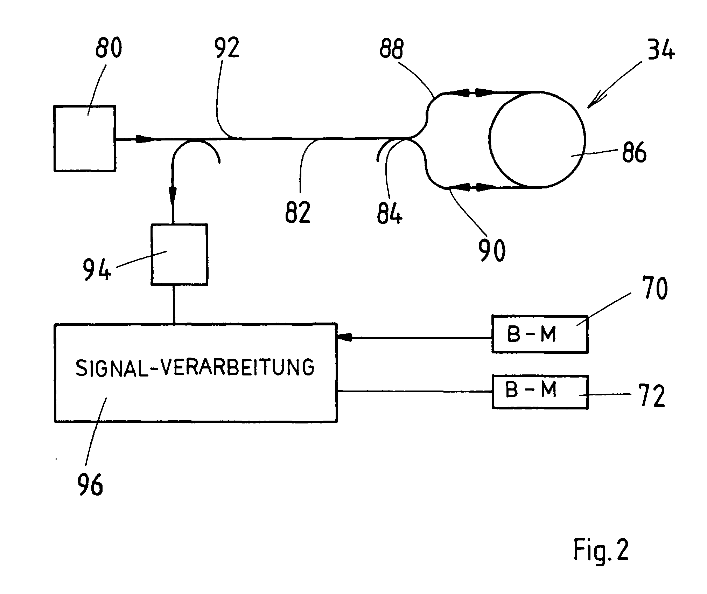

In Fig 2 ist mit 80 eine polarisierte Lichtquelle bezeichnet. Das Licht der Lichtquelle 80 ist über einen Lichtleiter 82 und einen Koppler 84 einmal linksherum und einmal rechtsherum in die flach-zylindrische Spule 86 des Faserkreisels 34 eingekoppelt. Die Spule 86 ist in Fig.2 als Kreis dargestellt. Die Spule 86 weist zwei Enden 88 und 90 auf. In das Ende 88 wird das rechtsherum durch die Spule 86 laufende Lichtbündel eingekoppelt. In das Ende 90 wird das linksherum durch die Spule 86 laufende Lichtbündel eingekoppelt. Das rechtsherum durch die Spule 86 laufende Lichtbündel tritt an dem Ende 90 aus und wird durch den Koppler 84 in den Lichtleiter 82 -jetzt von rechts nach links in Fig.2 laufend- eingekoppelt. Entsprechend tritt das linksherum durch die Spule 86 laufende Lichtbündel an dem Ende 88 aus und wird durch den Koppler 84 in den Lichtleiter 82 -wieder von rechts nach links in Fig.2 laufend- eingekoppelt. Die beiden Lichtbündel interferieren miteinander. Die interferierenden Lichtbündel werden von einem zweiten Koppler 92 auf einen photoelektrischen Detektor 94 geleitet.

Wenn die Spule 86 eine Drehgeschwindigkeit um ihre Achse relativ zum inertialen Raum erfährt, ändern sich durch den Sagnac-Effekt die optischen Weglängen für das rechtsherum und das linksherum laufende Licht. Dementsprechend ändert sich die Interferenz der beiden Lichtbündel und das von dem Detektor 94 gelieferte Signal. Der Faserkreisel 34 liefert ein der Drehgeschwindigkeit um die Achse der Spule 86 wiedergebendes Signal. Das ist an sich bekannte, dem Fachmann geläufige Technik und daher hier nicht im einzelnen beschrieben.

Das so erhaltene Drehgeschwindigkeits-Signal des Faserkreisels 34 ist auf signalverarbeitende Mittel 96 geschaltet. Die signalverarbeitenden Mittel 96 erhalten weiterhin Beschleunigungs-Signale von den beiden gehäusefesten Beschleunigungsmessern 70 und 72.

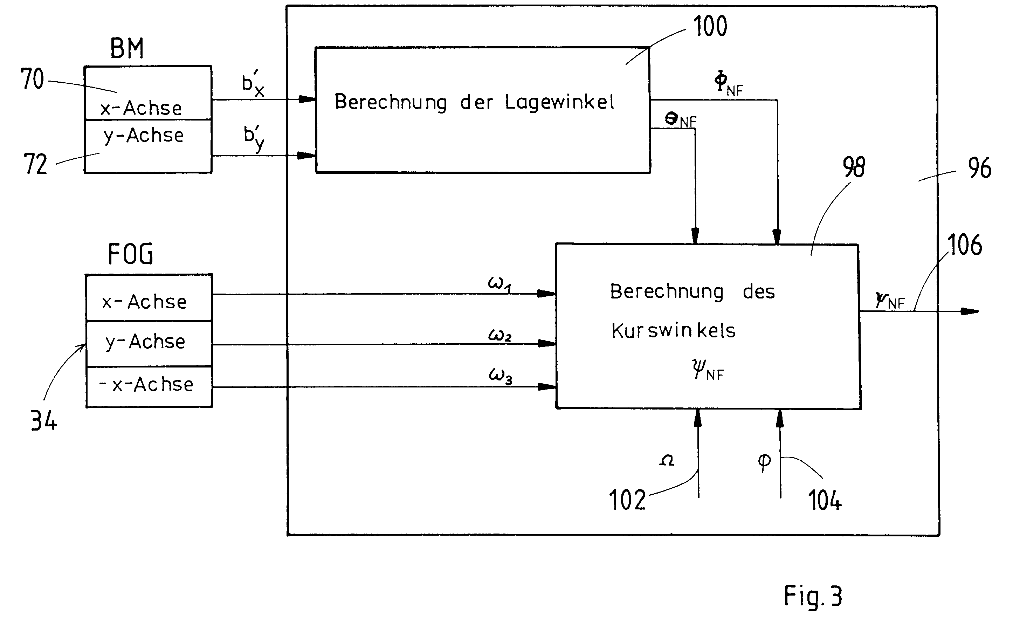

Fig.3 zeigt als Blockschaltbild die signalverarbeitenden Mittel 96 für die Bestimmung des Kurswinkels $\Psi_{NF}$, d.h. des Winkels zwischen Gehäuse- oder Fahrzeug-Längsachse und Nord.

Die Sensoren sind die beiden Beschleunigungsmesser 70 und 72 und der Faserkreisel (FOG) 34. Der Faserkreisel 34 liefert in den drei Stellungen 0°, 90° und 180° des Positionierrahmens 28 drei Winkelgeschwindigkeiten um die x-Achse, um die y-Achse und um die "-x"-Achse. Diese drei Winkelgeschwindigkeiten sind auf Mittel zur Berechnung des Kurswinkels aufgeschaltet, die in Fig.3 durch einen Block 98 dargestellt sind. Die Signale der beiden Beschleunigungsmesser sind auf einen Block 100 aufgeschaltet, der aus diesen Signalen die Lagewinkel $\Phi_{NF}$ und $\Theta_{NF}$ berechnet. Diese Lagewinkel $\Phi_{NF}$ und $\Theta_{NF}$ sind ebenfalls auf den Block 98 aufgeschaltet. Zur Berechnung des Kurswinkels erhält der Block 98 noch über Eingänge 102 und 104 die Erddrehrate $\Omega$ und die geographische Breite $\varphi$. An einem Ausgang 106 ergibt sich der Kurs- oder Azimutwinkel $\Psi_{NF}$.

Die Kursbestimmung gegen Nord beruht auf dem Prinzip der Auswertung der beiden Komponenten der Horizontalkomponente der Erd-Drehgeschwindigkeit $\Omega$ in den Richtungen der Längs- und Querachse des Fahrzeugs.

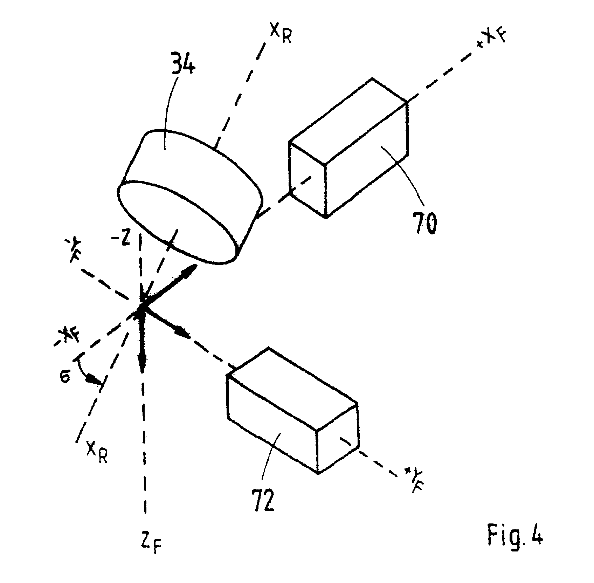

Fig.4 ist eine schematische Darstellung der Anordnung der Sensoren in bezug auf das fahrzeugfeste Koordinatensystem. Der Positionierrahmen befindet sich dabei in der 0°-Stellung. Das Sensorsystem ist ausgerichtet nach den fahrzeugfesten Achsen $X_F$ und $Y_F$. Senkrecht zu den beiden Achsen $X_F$ und $Y_F$ erstreckt sich die Hochachse $Z_F$. Die beiden Beschleunigungsmesser 70 und 72 sind mit ihren Empfindlichkeitsachsen parallel zu den Achsen $X_F$ und $Y_F$ ausgerichtet. Der Faserkreisel 34 mit der Spule 86 sitzt auf dem Positionierrahmen 28. Die Meßachse $X_R$ des Faserkreisels 34, d.h. die Achse der Spule 84 liegt in einer zu der Achse $Y_F$ senkrechten Ebene und ist gegen die $X_F$-$Y_F$-Ebene unter einem Elevationswinkel $\sigma$ angeordnet.

Der Nickwinkel des Fahrzeugs oder Gehäuses wird nachstehend mit $\Theta_{F/N}$ bezeichnet. Der Rollwinkel wird mit $\Phi_{F/N}$ bezeichnet, und der Azimutwinkel wird mit $\Psi_{F/N}$ bezeichnet. Für die drei Komponenten der Erd-Drehgeschwindigkeit $\Omega$ in Richtung der Achsen $X_F$, $Y_F$ und $Z_F$ des fahrzeugfesten Koordinatensystems und in diesem Koordinatensystem gemessen ergibt sich dann:

$$\omega_x = \Omega_c \cos\Theta_{F/N} \cos\Psi_{F/N} + \Omega_s \sin\Theta_{F/N}$$

$$\omega_y = \Omega_c (\sin\Phi_{F/N} \sin\Theta_{F/N} \cos\Psi_{F/N} - \cos\Phi_{F/N} \sin\Psi_{F/N}) - \Omega_s \sin\Phi_{F/N} \cos\Theta_{F/N}$$

$$\omega_z = \Omega_c (\cos\Phi_{F/N} \sin\Theta_{F/N} \cos\Psi_{F/N} + \sin\Phi_{F/N} \sin\Psi_{F/N}) - \Omega_s \cos\Phi_{F/N} \cos\Theta_{F/N}$$

Mit dem um den Elevationswinkel $\sigma$ gegen die $X_F$-$Y_F$-Ebene geneigten Faserkreisel 34 ergeben sich in den drei Positionen des Positionierrahmens folgende Signale des Faserkreisels 34:

$$\omega_1 = \cos\sigma\, \omega_x - \sin\sigma\, \omega_z + d + \omega_{Störbewegung}$$

$$\omega_2 = \cos\sigma\, \omega_y - \sin\sigma\, \omega_z + d + \omega_{störbewegung}$$

$$\omega_3 = -\cos\sigma\, \omega_x - \sin\sigma\, \omega_z + d + \omega_{störbewegung}$$

Darin ist d die Drift des Faserkreisels. $\omega_{störbewegung}$ ist die Stördrehrate, die durch Bewegungen des Fahrzeugs während der Nordsuche hervorgerufen wird, beispielsweise durch Drehschwingungen durch Motorlauf oder Einsackbewegungen auf weichem Untergrund. Die Stördrehraten können anhand der Lagewinkel und deren Zeitableitungen geschätzt und von den Meßsignalen subtrahiert werden.

Die Neigungswinkel $\Theta_{N/F}$ und $\Phi_{N/F}$ werden mittels der Beschleunigungsmesser 70 und 72 gemessen. Dann ergibt sich ein Gleichungssystem von drei Gleichungen mit drei Unbekannten, aus dem die drei Parameter $\cos\Psi_{F/N}$ und $\sin\Psi_{F/N}$ bestimmt werden können. Die beiden Werte $\cos\Psi_{F/N}$ und $\sin\Psi_{F/N}$ bestimmen auch den Quadranten des Azimutwinkels $\Psi_{F/N}$.

Der Azimutwinkel $\Psi_{F/N}$ ergibt sich mittels einer den Quadranten berücksichtigenden Arcustangens-Funktion

$$\Psi_{F/N} = \arctan (\sin\Psi_{F/N} / \cos\Psi_{F/N})$$

Die signalverarbeitenden Mittel sind zur Durchführung der vorstehend angegebenen Rechnungen programmiert.

Die Schrägstellung der Achse 46 des Faserkreisels 34 hat zur Folge, daß der Faserkreisel 34 auch auf Drehraten um die Hochachse anspricht. Dadurch kann das Signal des Faserkreisels 34 in Verbindung mit den Neigungs-Signalen von den Beschleunigungsmessern 70 und 72 auch benutzt werden, um nach der beschriebenen Bestimmung des Kurswinkels $\Psi_{NF}$ auch die Zeitableitung $\dot{\Psi}_{NF}$ des Kurswinkels zu bestimmen und daraus durch Integration die Änderung des zunächst gegen Nord bestimmten Kurswinkels.

Wenn mit der Inertialsensor-Anordnung nur der Azimutwinkel nach Nord bestimmt werden soll, kann der Elevationswinkel $\sigma$ auch null sein.

**Patentansprüche**

1. Inertialsensor-Anordnung mit einem unter Ausnutzung des Sagnac-Effekts arbeitenden Inertialsensor, der auf die Horizontalkomponente der Erddrehrate anspricht und um eine Hochachse in eine Mehrzahl fester Positionen verdrehbar ist, wobei aus den dabei erhaltenen Signalen durch Signalverarbeitungs-Mittel ein Meßwert für den Winkel zwischen einer Referenz-Richtung und Nord gebildet wird, **dadurch gekennzeichnet, daß**

   (a) der Inertialsensor von einem Faserkreisel (34) gebildet ist,

   (b) der Faserkreisel (34) auf einem Positionierrahmen (28) angeordnet ist, der gegenüber einem Gehäuse um die Hochachse drehbar gelagert ist, und

   (c) der Positionierrahmen (28) durch Einstellmittel (62,60,54) in drei feste, durch Arretiermittel (64,50,52) festgelegte Positionen eindrehbar ist und

   (d) zur Bestimmung der Neigung der Inertialsensor-Anordnung relativ zu der Horizontalen Neigungssensoren mit zueinander gekreuzten Empfindlichkeitsachsen vorgesehen sind.

2. Inertialsensor-Anordnung nach Anspruch 1, **dadurch gekennzeichnet, daß** die Neigungssensoren an dem Gehäuse fest angebracht sind

3. Inertialsensor-Anordnung nach Anspruch 1 oder 2, **dadurch gekennzeichnet, daß** die Eingangsachse des Faserkreisels (34) mit einer zur Hochachse senkrechten Ebene um einen Elevationswinkel ($\sigma$) geneigt ist.

4. Inertialsensor-Anordnung nach einem der Ansprüche 1 bis 3, **dadurch gekennzeichnet, daß**

   (a) die Signalverarbeitungs-Mittel von Leiterkarten (12,14,16,18,20) mit elektronischen Bauteilen gebildet sind, die einen Boden und Seitenwände eines rechteckiges Innengehäuses (10) bilden,

   (b) durch den Boden hindurch eine Lageranordnung (26) für den Positionierrahmen (28) in das Innengehäuse (10) hineinragt, so daß der Positionierrahmen (28) innerhalb des Innengehäuses (10) drehbar in der Lageranordnung (26) gelagert ist, und

   (c) auf das Innengehäuse (10) ein am Boden offenes rechteckiges Außengehäuse (74) aufgesetzt ist.

5. Inertialsensor-Anordnung nach Anspruch 4, **dadurch gekennzeichnet, daß** der Positionierrahmen (28) eine Zahnriemenscheibe (54) aufweist, und ein auf einer der Leiterplatten (14) montierter Stellmotor (62) mit der Zahnriemenscheibe (54) über einen Zahnriemen (60) gekuppelt ist.

6. Inertialsensor-Anordnung nach Anspruch 5, **dadurch gekennzeichnet, daß** an einem Positionierring (50) des Positionierrahmens (28) in Umfangsrichtung gegeneinander versetzte, v-förmige Kerben (52) vorgesehen sind und an einer der Leiterplatten (14) eine steuerbare Arretierstift-Einheit (64) sitzt, deren Arretierstift (66) in jeweils eine der Kerben (52) bei definierter Winkellage des Positionierrahmens (28) einrastbar ist.

7. Inertialsensor-Anordnung nach einem der Ansprüche 1 bis 6, **dadurch gekennzeichnet, daß** der Positionierrahmen (28) in drei um jeweils 90° gegeneinander winkelversetzten Positionen arretiebar ist

8. Inertialsensor-Einheit nach den Ansprüchen 3 und 4, **dadurch gekennzeichnet, daß** als Neigungs-Sensoren zwei zueinander gekreuzt angeordnete Beschleunigungsmesser (70,72) auf Leiterplatten (18,20) des Innengehäuses (10) montiert sind.

9. Inertialsensor-Anordnung nach einem der Ansprüche 1 bis 8, **dadurch gekennzeichnet, daß** eine getrennte Anzeige- und Bedieneinheit (76) mit dem übrigen Gerät über ein Kabel (78) verbunden ist.

FIG. 1

Fig.2

EP 0 790 485 A2

Fig. 3

BM

70 — x-Achse

72 — y-Achse

$b'_x$

$b'_y$

100

Berechnung der Lagewinkel

$\Phi_{NF}$

$\Theta_{NF}$

98

96

FOG

x-Achse

y-Achse

-x-Achse

34

$\omega_1$

$\omega_2$

$\omega_3$

Berechnung des Kurswinkels

$\psi_{NF}$

106

$\psi_{NF}$

$\Omega$          $\varphi$

102          104

EP 0 790 485 A2

Fig. 4

Fig.5